# FASCICULE DE BREVET EUROPEEN

(11) **EP 3 744 622 B1**
(45) Date de publication et mention de la délivrance du brevet: **16.07.2025**
(21) Numéro de dépôt: 20177589.7
(22) Date de dépôt: 29.05.2020
(51) Int. Cl.: B62D 63/02, B62D 27/06, B62D 24/00, B62D 29/04

(54) **ARCHITECTURE DE VÉHICULE**
AUFBAU EINES FAHRZEUGS
VEHICLE ARCHITECTURE

(30) Priorité: 29.05.2019 EP 19177383
(43) Date de publication de la demande: 02.12.2020
(73) Titulaire: Softcar SA, 1700 Fribourg (CH)
(72) Inventeur: THULIEZ, Jean-Luc, 2525 Le Landeron (CH); CROZIER, Etienne, 2520 La Neuveville (CH); ZIMMERMANN, Robin, 2520 La Neuveville (CH); QUERRY, Hector, 2520 La Neuveville (CH); ALEXANDRE, Quentin, 2520 La Neuveville (CH); HEISEL, Guillaume, 2503 Bienne (CH)
(74) Mandataire: Grosfillier, Philippe

(56) Documents cités:
- EP-A2- 0 278 479
- WO-A1-2017/109726
- DE-U1- 202006 008 389
- FR-A1- 2 972 169

## Description

### DOMAINE TECHNIQUE

La présente invention concerne l'architecture d'un véhicule à faible empreinte écologique, léger, modulaire, comportant des moyens de sécurités destinés à la protection des personnes en cas d'accident. Plus particulièrement, la présente invention concerne un véhicule ayant l'architecture décrite dans la présente demande et les moyens utilisés pour le former.

### TECHNIQUE ANTERIEURE

La fabrication des véhicules actuels, majoritairement sur une base de châssis-coque acier, nécessite l'emploi de techniques polluantes et coûteuses en investissement. Chaque feuillard de tôle doit ainsi passer par les étapes suivantes : dégraissage au solvant, huilage avant estampage, dégraissage au solvant avant assemblage par soudure sur une ligne robotisée, bain cataphorèse de protection, peinture quatre couches de protection, vernis de protection peinture finition, puis retouche en fin d'assemblage. Ces étapes génèrent une pollution directe et une grande quantité d'énergie grise. La ligne de ferrage nécessite des immobilisations de capital de plusieurs milliards d'euros, et conditionne une production en ligne nécessitant une surface de production très importante. La production en grande série de véhicules légers à faible empreinte écologique est devenue un enjeu économique majeur.

Cependant, la diminution de l'empreinte écologique, passant généralement par l'emploi de matériaux légers et peu énergivores à mettre en forme, se fait souvent au détriment de la sécurité des passagers. Cree propose de réaliser un châssis sensiblement plan, sur lequel repose une coque polymère, sans renfort de crash ou d'anti-intrusion. Tata a dessiné une voiture en deux demi-pièces rotomoulées, composée intégralement de polymère, sans renfort métallique. Renault propose pour certaines versions de sa Twizzy de supprimer les portes. En cas de choc frontal, de choc latéral ou de retournement, ces structures ne présentent aucune sécurité, mettant en danger l'intégrité physique des passagers, en particulier si l'accident implique l'intervention d'un véhicule à l'architecture standard type châssis-coque acier.

Softcar SA, dans la demande de brevet WO2017109726A1, propose un châssis léger et modulaire muni d'une poutre transversale de renfort, mais celle-ci ne sera efficace qu'avec de bonnes fixations et un renvoi des forces efficace. Telle que décrite dans cette publication, l'architecture reste perfectible et ne solutionne pas les problématiques de retournement du véhicule. Enfin, le montage et démontage des différents modules restait complexe en raison des connexions hydrauliques et électriques.

La publication EP 0278479 décrit un châssis de véhicule qui se compose de trois sections de châssis séparées longitudinalement, c'est-à-dire une section de châssis avant, une section de châssis centrale et une section de châssis arrière. Les sections de châssis sont fabriquées et assemblées dans les lignes indépendantes et équipées de sous-ensembles de châssis indépendamment, de manière à constituer un module de châssis avant, un module de châssis central et un module de châssis arrière, respectivement et les modules de châssis sont enfin boulonnés ensemble pour constituer un châssis complet.

### Exposé de l'invention

Un but de la présente invention est de proposer une architecture de véhicule et un véhicule améliorés.

La présente invention permet de pallier l'ensemble des inconvénients mentionnés ci-dessus. Elle permet notamment mais non exclusivement de réaliser un véhicule avec une coque en une seule pièce, des interfaces entre les modules permettant d'obtenir une bonne sécurité, des éléments mécaniques de renvoi des efforts dans le châssis et dans la coque, et un assemblage simple de l'ensemble pour former un véhicule.

L'invention comprend notamment l'assemblage d'un module coque et d'un châssis plateforme structurelle rigide. Le châssis est lui-même l'assemblage de 3 modules formés de préférence majoritairement en aluminium ou en composite avancé, par exemple : le module batterie appelé ci-après BAT, le module berceau avant appelé ci-après BAV, et le module berceau arrière appelé ci-après BAR.

Le BAT contient la batterie de propulsion et le boitier de la batterie qui est également un élément de structure. Le BAV comprend le train roulant avant, le moteur, le contrôleur moteur, le chargeur de batterie de propulsion, les airbags, le maitre-cylindre du système de freinage et des éléments de structure et d'absorption d'énergie. Le BAR comprend le train roulant arrière contenant des étriers de frein, d'éléments électriques tels que des capteurs, et d'éléments de structure et d'absorption d'énergie. Bien entendu, la répartition des éléments n'est pas limitée à celle mentionnée ci-dessus et une autre répartition est possible. De préférence, ces modules sont encastrés les uns dans les autres et boulonnés. D'autres moyens d'assemblage équivalents sont bien entendu possibles. Les fixations sont prévues de telle sorte que les éléments structurels principaux des différents modules forment des lignes continues de renvoi d'effort, en particulier les efforts de crash. Le châssis ainsi assemblé est mécaniquement assez rigide pour reprendre tous les efforts dynamiques du véhicule roulant. Il reprend entièrement les forces envoyées par les amortisseurs et suspensions. Sa bonne rigidité torsionnelle sans ajout de superstructure lui permet d'accueillir une coque souple sans que cela n'occasionne de crissement, de grincement ou de déformations de la coque. C'est un module indépendant de la coque et il peut rouler sans celle-ci.

Le module coque est l'habitacle et la carrosserie du véhicule. Il est constitué favorablement et de préférence d'une seule grande pièce moulée en corps creux, favorablement en bio-polymères, présentant une peau intérieure formant l'habitacle et une peau extérieure formant le style extérieur du véhicule, des inserts métalliques ayant été incorporés à la pièce lors du processus de rotomoulage. Selon un autre mode de réalisation, il peut être composé de plus d'une pièce. Des éléments électriques tels que les essuies glace, les phares ou les clignotants font également de préférence partie du module coque.

Les modules sont reliés les uns aux autres par des connexions mécaniques réalisées, par exemple, par de simples encastrements et boulonnage. D'autres moyens équivalents sont également envisageables. Le BAV est également relié au BAT par un connecteur de durit de frein et des connecteurs électriques (par exemple deux connecteurs). Le BAT est relié au BAR par un connecteur de durit de frein, et au moins un connecteur électrique. Le BAV est relié au module coque par un ou plusieurs connecteurs électriques. Ainsi, selon la présente invention, les différents modules sont de préférence uniquement reliés par des connexions mécaniques, électriques et hydrauliques simples, de préférence déconnectables ou détachables, et peu nombreuses (encastrement, boulons et connecteurs), rendant l'assemblage ou le désassemblage des différents modules simple et rapide.

Cette construction permet de réduire l'énergie grise contenue dans un véhicule, par la fabrication de modules de faibles dimensions, transportés et assemblés dans une unité d'assemblage finale proche des lieux de consommation, c'est à dire des grandes villes, et nécessitant très peu d'investissements. Elle permet en effet d'assembler des voitures hors ligne, sans outils spécifique. Cette énergie grise est également réduite par le transport des module palettisés, favorablement par train, celui-ci étant rendu possible par la faible dimension des modules. Le remplacement des modules en cas de défaut, de panne, d'entretien ou d'accident est également simplifié.

La présente invention permet simultanément de réduire l'empreinte écologique, puisque toute la pollution de ligne de ferrage d'acier a disparu (dégraissage au solvant, huilage avant estampage, dégraissage au solvant avant assemblage par soudure sur une ligne robotisée, bain cataphorèse de protection, peinture quatre couches de protection, vernis de protection peinture finition, puis retouche en fin d'assemblage). Les chutes des feuilles de tôles ont aussi disparu puisque toute la matière au départ se retrouve dans la pièce finale.

La présente invention se démarque également de celle présentée dans WO2017109726A1 notamment de par sa poutre transversale qui constitue le point central de reprise des efforts en cas d'accident.

Lors d'un crash avant, les efforts passeront par les absorbeurs d'énergie puis dans des longerons du BAV s'appuyant sur la poutre transversale. Cette poutre transversale est elle-même reliée au BAT par des montants inclinés, de façon à réaliser une structure triangulaire. De par cette structure, les efforts sont dirigés dans les longerons latéraux du BAT, donc détournés des passages présents au centre du véhicule. Tous ces éléments travaillent principalement en traction compression et sont donc aptes à résister aux efforts de crash.

Lors d'un choc latéral, la porte impactée s'appuiera sur les montants de la poutre transversale et sur les longerons latéraux du BAT. Les efforts seront ensuite transmis aux traverses du BAT et à la poutre transversale, contournant ainsi l'espace de survie des passagers. Des absorbeurs d'énergie protègent la batterie de chaque côté.

Lors d'un retournement sur le toit de la voiture, les parties latérales de la poutre transversale s'appuieront sur les piliers de pare-brise de la coque, et les arceaux de sécurité des sièges sur le toit. De cette façon, l'habitacle ne s'écrasera pas, préservant l'intégrité physique des passages.

Selon un mode de réalisation non limitatif, des renforts structurels peuvent être intégrés dans la coque lors du rotomoulage de celle-ci. Ainsi, des renforts dans le toit et les piliers de la coque permettront de renforcer la cellule de survie en cas de retournement. Ces renforts locaux permettent d'accrocher les ceintures de sécurité et les ouvrants sur le véhicule par des fixations appropriées.

Selon un mode de réalisation, le véhicule peut être hybride. Il est alors de préférence équipé d'un "range extender" (comme un moteur d'appoint) alimenté en carburant par des réservoirs de carburant. Le carburant peut être de l'hydrogène, de l'essence, du gaz naturel, du biogaz ou du méthane pur.

Selon un mode de réalisation non limitatif, la poutre transversale et ses montants font partie intégrante du BAV et sont fixés au BAT lors de l'assemblage final du véhicule. Ceci permet de simplifier le module coque au maximum pour un montage/démontage rapide sur le châssis et un recyclage simple.

L'invention porte notamment sur l'architecture de véhicule telle que définie dans les revendications et dans les modes d'exécution décrits ci-dessous. L'invention porte également sur un véhicule formé au moyen de cette architecture et sur la méthode de fabrication d'un tel véhicule, par exemple par assemblage de ses parties.

### Description sommaire des dessins

La présente invention et ses avantages apparaîtront mieux dans la description ci-dessous de modes de réalisation donnés à titre d'exemples non limitatifs, en référence aux dessins annexés dans lesquels :
- la figure 1 représente une vue en perspective des trois modules du châssis palettisés.

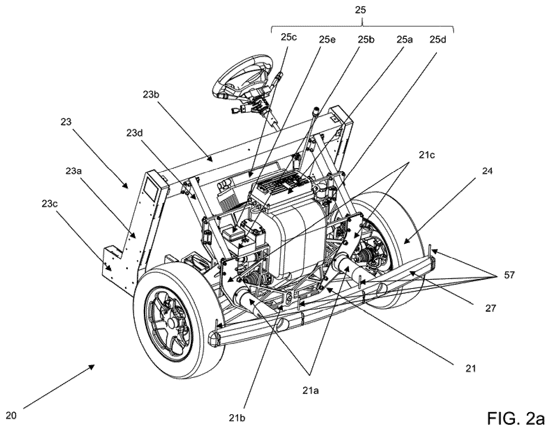

- la figure 2a représente une vue en perspective avant du BAV,

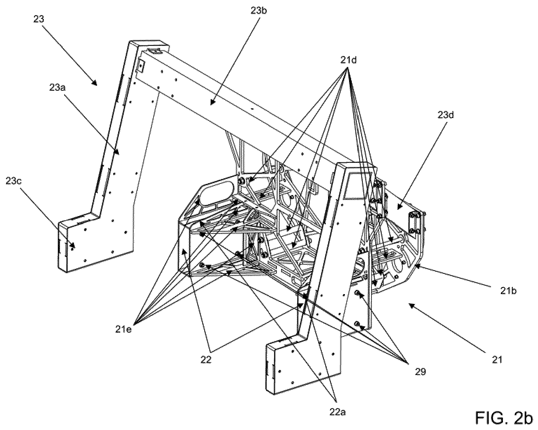

- la figure 2b représente une vue en perspective arrière de la structure du BAV,

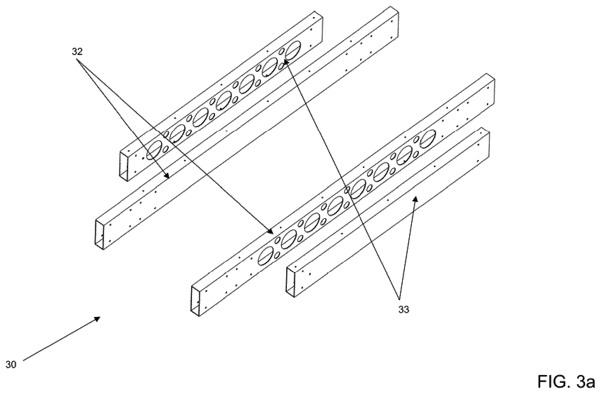

- la figure 3a représente une vue en perspective des longerons du BAT,

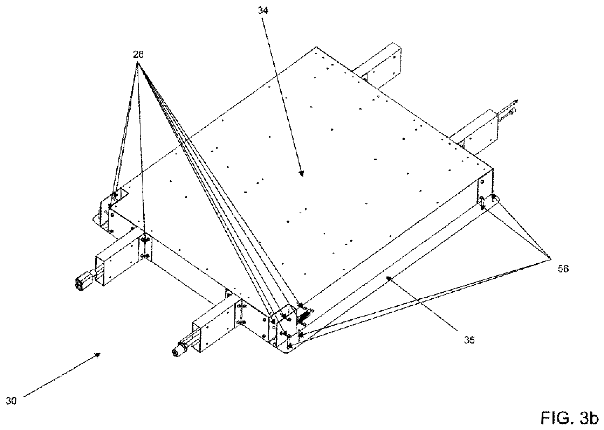

- la figure 3b représente une vue en perspective du BAT,

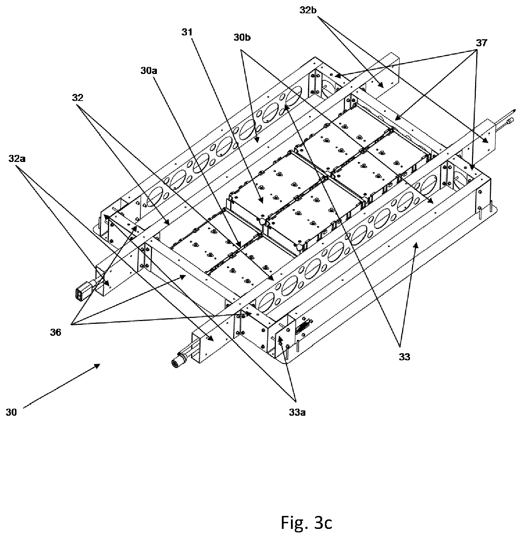

- la figure 3c représente une vue en perspective du BAT sans plancher,

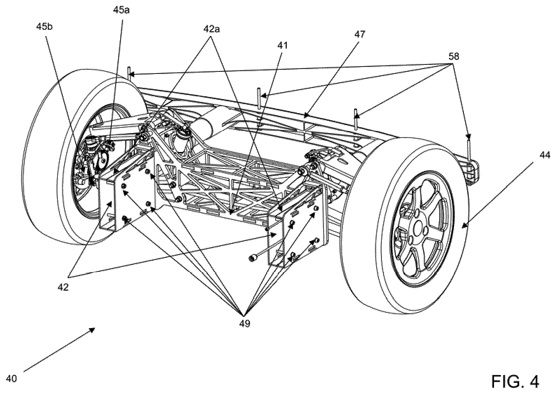

- la figure 4 représente une vue en perspective du BAR,

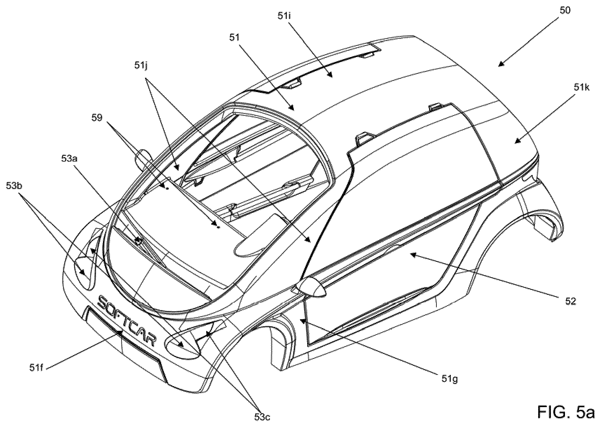

- la figure 5a représente une vue en perspective supérieure du module coque,

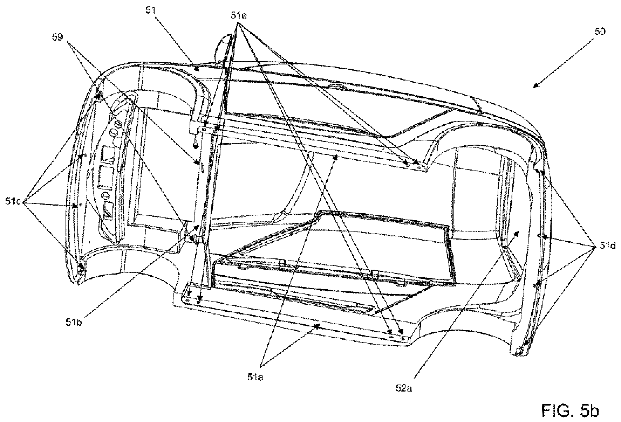

- la figure 5b représente une vue en perspective inférieure du module coque

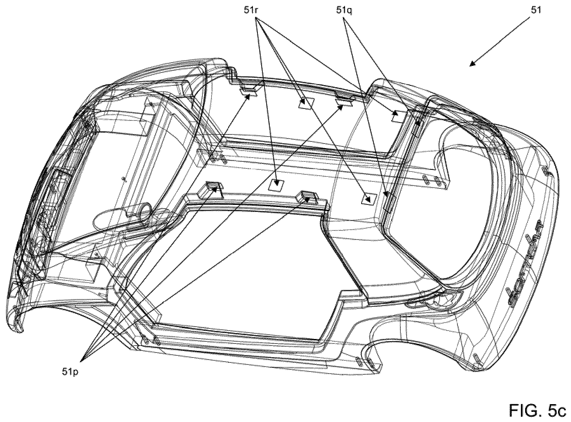

- la figure 5c représente une vue en perspective de l'habitacle faisant apparaître des inserts internes,

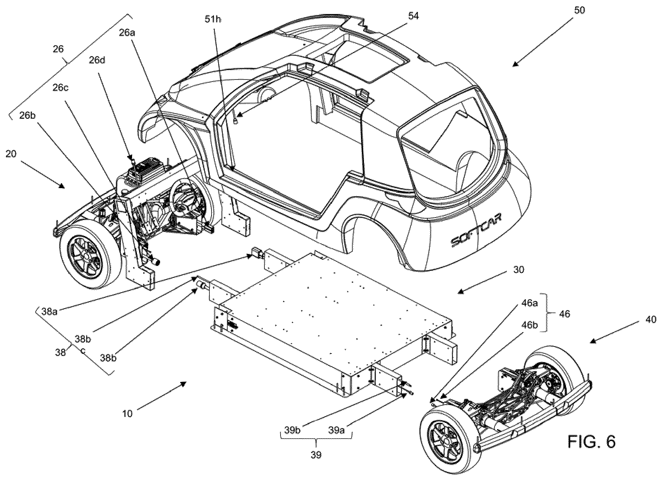

- la figure 6 représente une vue éclatée en perspective des 4 modules du véhicule,

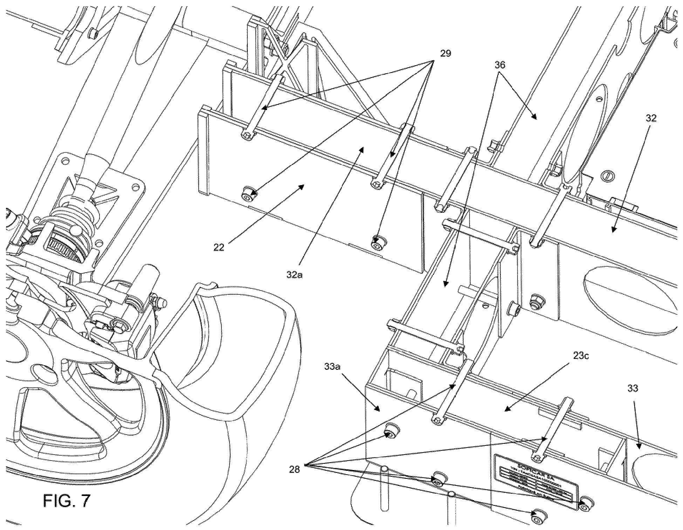

- la figure 7 représente une vue en coupe de la fixation entre le BAV et le BAT,

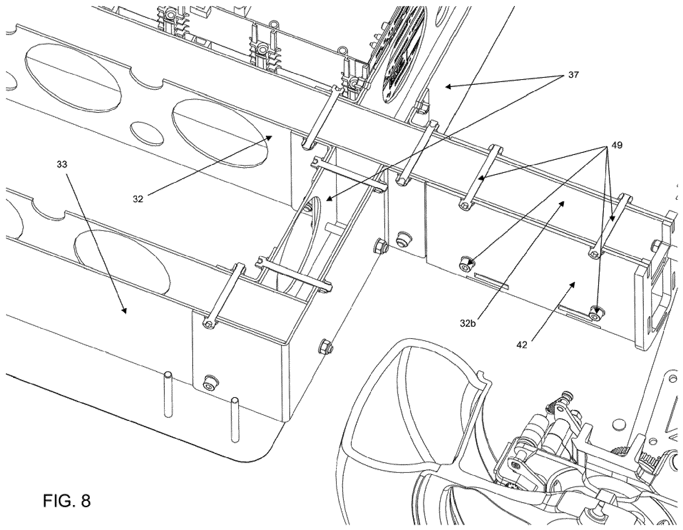

- la figure 8 représente une vue en coupe de la fixation entre le BAR et le BAT,

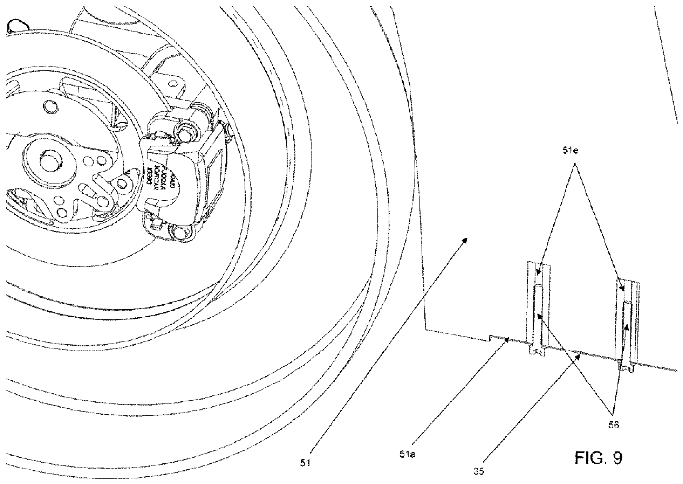

- la figure 9 représente une vue en coupe de la fixation entre le BAT et le module coque,

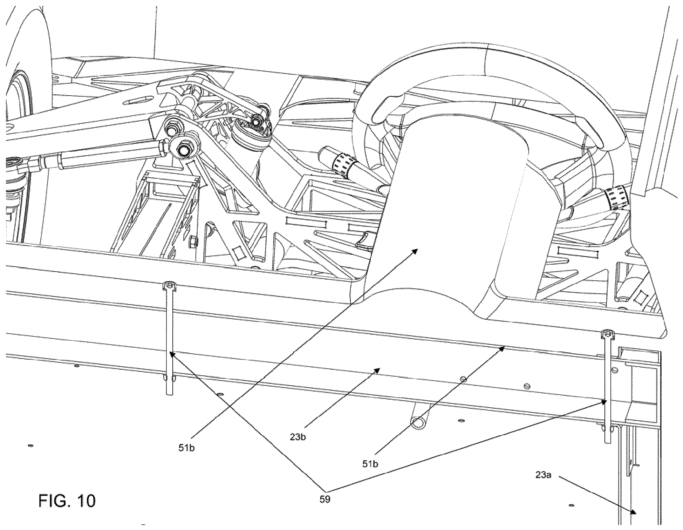

- la figure 10 représente une vue en coupe de la fixation entre la structure en U et le module coque,

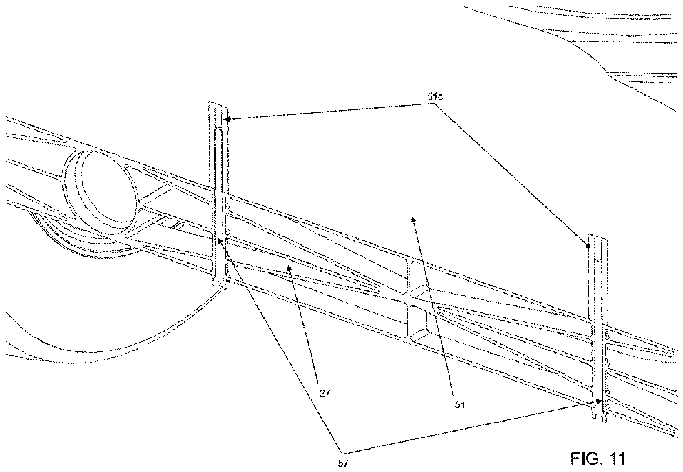

- la figure 11 représente une vue en coupe de la fixation entre le BAV et le module coque,

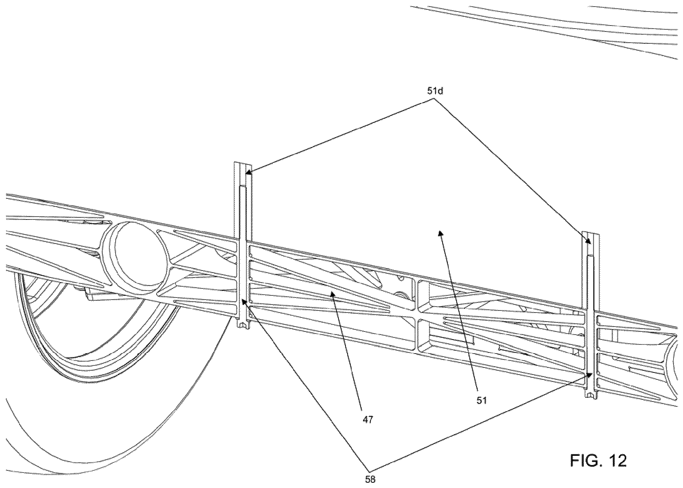

- la figure 12 représente une vue en coupe de la fixation entre le BAR et le module coque,

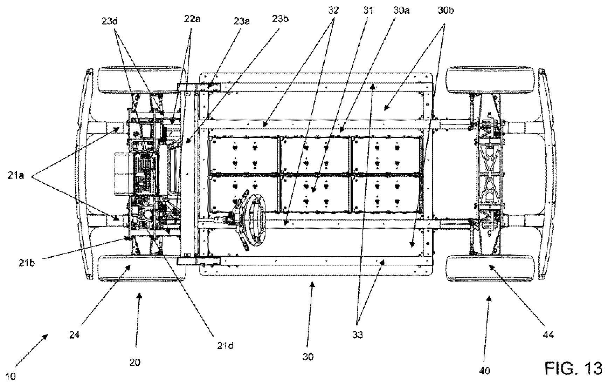

- la figure 13 représente une vue de dessus du châssis assemblé sans le plancher,

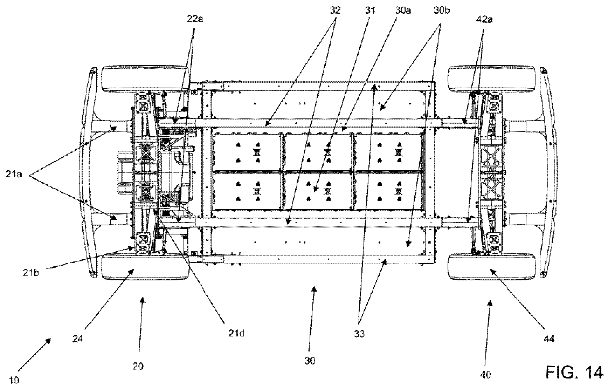

- la figure 14 représente une vue de dessous du châssis assemblé sans le fond,

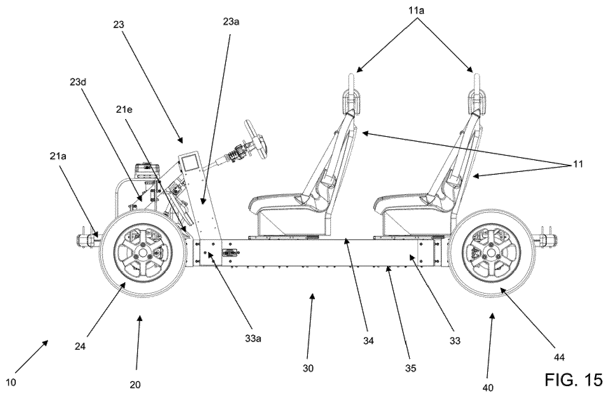

- la figure 15 représente une vue de côté du châssis assemblé avec les sièges,

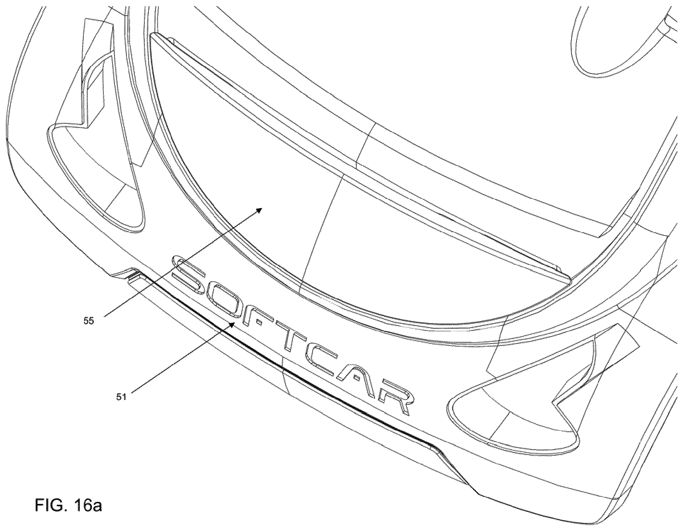

- la figure 16a représente une vue en perspective de l'avant du module coque avec sa trappe,

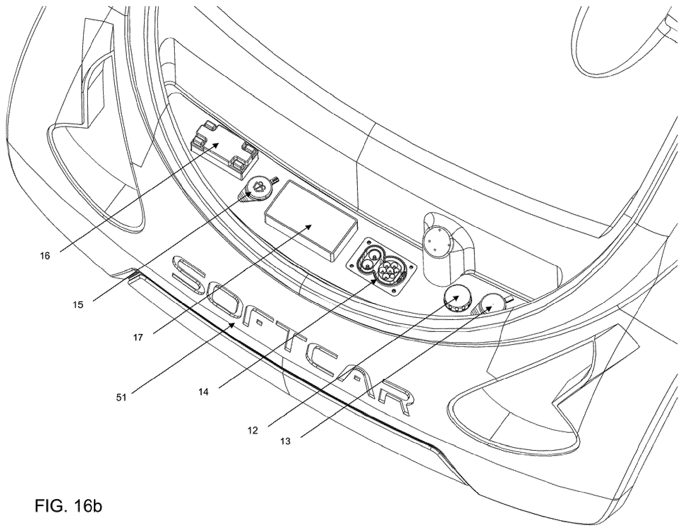

- la figure 16b représente une vue en perspective de l'avant du module coque sans la trappe,

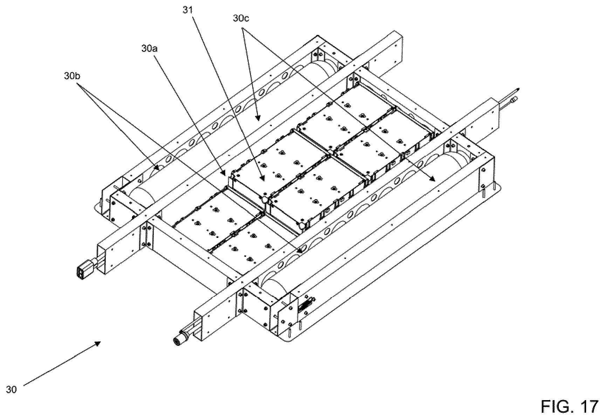

- la figure 17 représente une vue du BAT muni de réservoirs de carburant,

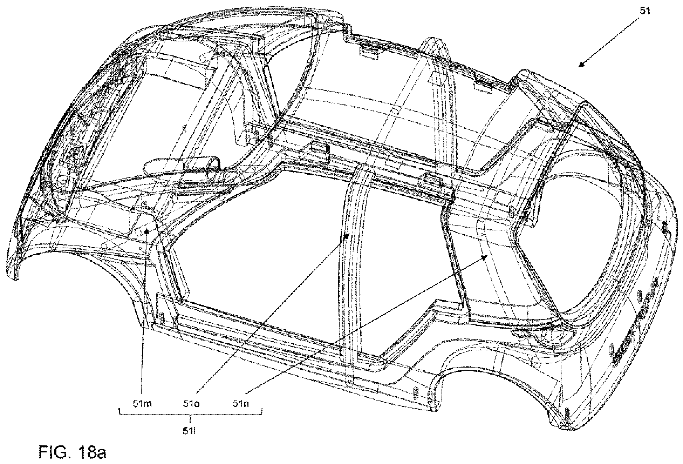

- la figure 18a représente une vue en perspective du module coque intégrants des renforts locaux,

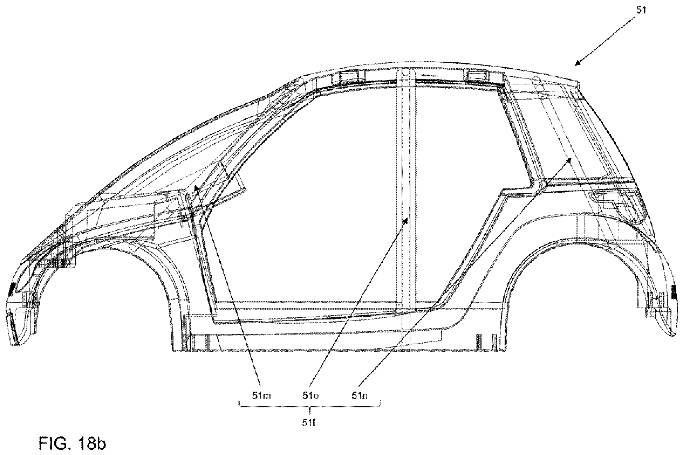

- la figure 18b représente une vue de côté du module coque intégrants des renforts locaux.

### Références numériques des éléments

- 10 : châssis plateforme
- 11 : siège
- 11a : arceaux
- 12 : réservoir de liquide de frein
- 13 : réservoir de liquide de refroidissement
- 14 : prise de recharge batterie
- 15 : réservoir du lave glace
- 16 : batterie de bord
- 17 : boite à fusible
- 20 : module berceau avant (BAV)
- 21 : berceau avant
- 21a : absorbeur avant
- 21b : face avant BAV
- 21c : renfort avant BAV
- 21d : renfort BAV
- 21e : renfort arrière BAV
- 22 : encastrement avant
- 22a : fente
- 23 : structure en U
- 23a : montant de U
- 23b : poutre transversale de U
- 23c : fixation montant de U
- 23d : renfort de U
- 24 : train roulant
- 25 : accessoires BAV
- 25a : contrôleur moteur
- 25b : DC/DC
- 25c : chargeur
- 25d : maître cylindre
- 25e : ordinateur de bord
- 26 : éléments de connexion BAV
- 26a : connecteur électrique de puissance BAV
- 26b : connecteur électrique BAV
- 26c : connecteur de durit de frein AV
- 26d : connecteur électrique CoqueAV
- 27 : traverse absorbeur avant
- 28 : vis/écrous BAT/U
- 29 : vis/écrous BAT/BAV
- 30 : module batterie (BAT)
- 30a : compartiment central
- 30b : compartiment latéral
- 30c : réservoir carburant
- 31 : batterie
- 32 : longeron interne
- 32a : extrémité avant
- 32b : extrémité arrière
- 33 : longeron latéral
- 33a : encastrement de U
- 34 : plancher
- 35 : fond
- 36 : traverse avant
- 37 : traverse arrière
- 38 : éléments de connexion BATV
- 38a : connecteur électrique de puissance BAT
- 38b : connecteur électrique BATV
- 38c : connecteur de durit de frein BATV
- 39 : éléments de connexion BATR
- 39a : connecteur électrique BATR
- 39b : connecteur de durit de frein BATR
- 40 : module berceau arrière (BAR)
- 41 : berceau arrière
- 42 : encastrement arrière
- 42a : fente
- 44 : train roulant arrière
- 45 : accessoires BAR
- 45a : capteurs électriques
- 45b : étrier de frein
- 46 : éléments de connexion BAR
- 46a : connecteur électrique BAR
- 46b : connecteur de durit de frein AR
- 47 : traverse absorbeur arrière
- 49 : vis/écrous BAT/BAR
- 50 : module coque (coque)
- 51 : habitacle
- 51a : face fixation BAT
- 51b : support de planche de bord
- 51c : inserts de fixation BAV
- 51d : inserts de fixation BAR
- 51e : inserts de fixation BAT
- 51f : face avant
- 51g : face latérale
- 51h : contours d'ouvrant
- 51i : toit
- 51j : pilier de pare-brise
- 51k : pilier de hayon
- 51l : renfort coque supérieur
- 51m : renfort pare-brise
- 51n : renfort hayon
- 51o : renfort ouvrant
- 51p : insert ouvrants
- 51q : inserts hayon
- 51r : inserts ceintures
- 52 : ouvrants
- 52a : hayon
- 53 : accessoires coque
- 53a : essuie-glace
- 53b : phare
- 53c : clignotant
- 54 : connecteur électrique coque
- 55 : trappe
- 56 : vis BAT/coque
- 57 : vis BAV/coque
- 58 : vis BAR/coque
- 59 : vis U/coque

### Description détaillée de mode d'exécution de l'invention

L'invention ne se limite pas aux formes de réalisation ou modes d'exécution décrits, mais est susceptible d'être modifiée en faisant appel à des moyens équivalents à ceux décrits.

En référence aux figures, le véhicule, homologué pour la circulation, est formé de préférence par l'assemblage de quatre modules : le module berceau avant appelé ci-après BAV (20), le module batterie appelé ci-après BAT (30), le module berceau arrière appelé ci-après BAR (40) et le module de coque appelé ci-après coque (50). Ledit BAV (20), ledit BAT(30) et ledit BAR (40) assemblés forment le châssis plateforme appelé ci-après châssis (10),supportant ladite coque(50).

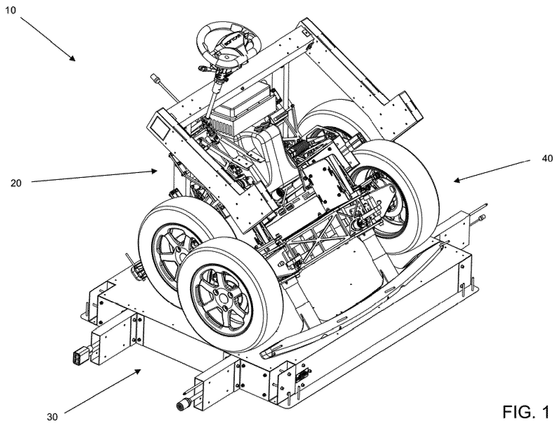

Les trois modules 20, 30, 40 dudit châssis (10) peuvent être fabriqués, assemblés et contrôlés dans différentes usines sous-traitantes. De par leur compacité, ces ensembles peuvent ensuite être palettisés, tel que représenté sur la figure 1, afin de faciliter leur envoi à un centre d'assemblage final. Ceci diminue l'énergie grise de fabrication du véhicule.

Ledit BAT (30) est un boitier renfermant la batterie (31). C'est un élément sensiblement plat et rigide ne possédant pas de superstructure. Il sert de support aux sièges (11) et de plateforme centrale pour assembler les autres modules. Il comprend deux longerons internes (32), deux longerons latéraux (33), un plancher (34), un fond (35), des traverses avant (36) et des traverses arrières (37). Ces éléments sont de préférence en aluminium et de préférence assemblés par rivetage/collage, par exemple. Selon un autre mode de réalisation, en grande série, l'ensemble peut aussi être réalisé par surmoulage desdits longerons aluminium (32, 33) par du thermoplastique renforcé estampable. Ledit BAT (30) est également équipé d'éléments de connexion BATV (38) et d'éléments de connexion BATR (39). Lesdits éléments de connexion BATV (38) comprennent par exemple un connecteur électrique de puissance BAT (38a), un connecteur électrique BATV (38b) et un connecteur de durit de frein BATV (38c). Lesdits éléments de connexions BATR (39) comprennent par exemple un connecteur électrique BATR (39a) et un connecteur de durit de frein BATR (39b).Ledit connecteur de durit de frein BATV (38c) est relié audit connecteur de durit de frein BATR (39b) par des durits de frein.

Ledit BAV (20) est une structure rigide sur laquelle sont montés le train roulant avant (24) et les éléments de motorisation du véhicule. Ladite structure rigide comprend par exemple un berceau avant (21), deux encastrements avant (22), une structure en U (23). Ledit berceau avant (21) supporte la plupart des accessoires BAV (25) dudit BAV (20).

Lors du montage dudit châssis (10) dans le centre d'assemblage final, l'extrémité avant (32a) desdits longerons internes (32) dudit BAT (30) sont insérés à l'intérieur desdits encastrements avant (22) sur une longueur sensiblement supérieure aux dimensions de la section de ces éléments, afin d'obtenir une portée suffisante pour supporter les efforts de flexion. De façon avantageuse, des faces inclinées sont aménagées sur lesdites extrémités avant (32a) desdits longerons internes (32) et/ou sur lesdits encastrements avant (22) dudit BAV (20) afin de faciliter le positionnement de l'un dans l'autre. Lesdits longerons internes (32) et encastrements avant (22) sont ensuite fixés les uns aux autres par des vis/écrous BAT/BAV (29). De façon avantageuse, lesdits encastrements avant (22) possèdent une ou plusieurs fentes (22a) permettant de réduire le jeu avec lesdits longerons internes (32) lors du serrage des vis/écrou BAT/BAV (29).

Ladite structure en U (23) dudit BAV (30) est formée de deux montants de U (23a) sur lesquels vient reposer une poutre transversale de U (23b). Ladite structure en U (23) est solidaire dudit berceau avant (21), fixé à celui-ci par des vis/écrous. Elle possède également des fixations montantes de U (23c) dans la partie basse desdits montants de U (23a) qui viennent se loger dans les encastrements de U (33a) à l'extrémités avant desdits longerons latéraux (33) dudit BAT (30) lors du montage dudit châssis (10) dans le centre d'assemblage final. De façon avantageuse, des faces inclinées sont aménagées sur lesdits encastrement de U (33a) desdits longerons latéraux (33) et/ou sur lesdites fixation montant de U (23c) de ladite structure en U (23) afin de faciliter le positionnement de l'un dans l'autre. Lesdites fixations montantes de U (23c) et encastrements de U (33a) sont ensuite fixés les uns aux autres par des vis/écrous BAT/U (28).

Lesdits accessoires BAV (25) dudit BAV (20) sont connectés avec les autres modules par des éléments de connexion BAV (26). Ledit BAV (20) possède ainsi un contrôleur moteur (25a) alimenté par la batterie grâce à un connecteur électrique de puissance BAV (26a) branché audit connecteur électrique de puissance BAT (38a) dudit BAT (30) ; un DC/DC (25b) et un chargeur (25c) reliés à la batterie par un connecteur électrique BAV (26b) branché audit connecteur électrique BATV (38b) dudit BAT (30) ; un maître-cylindre (25d) relié à un connecteur de durit de frein AV (26c). Ledit connecteur de durit de frein AV (26c) peut être un connecteur rapide ou un raccord vissé ou autre. Il est connecté audit connecteur de durit de frein BATV (38c) dudit BAT (30). Un ordinateur de bord (25e) fait également partie desdits accessoires BAV (25) dudit BAV (20). Un connecteur électrique Coque AV (26d) fait également partie desdits éléments de connexion BAV (26) dudit BAV (20).

Ledit BAR (40) est une structure rigide sur laquelle sont montés le train roulant arrière (44) et des accessoires BAR (45). Ladite structure rigide comprend un berceau arrière (41) et deux encastrements arrière (42). Lors du montage dudit châssis (10) dans le centre d'assemblage final, l'extrémité arrière (32b) desdits longerons internes (32) dudit BAT (30) sont insérés à l'intérieur desdits encastrements arrière (42) sur une longueur sensiblement supérieure aux dimensions de la section de ces éléments, afin d'obtenir une portée suffisante pour supporter les efforts de flexion. De façon avantageuse, des faces inclinées sont aménagées sur lesdites extrémité arrière (32b) desdits longerons internes (32) et/ou sur lesdits encastrements arrière (42) dudit BAR (40) afin de faciliter le positionnement de l'un dans l'autre. Lesdits longerons internes (32) et encastrements arrière (42) sont ensuite fixés les uns aux autres par des vis/écrous BAT/BAR (49). De façon avantageuse, lesdits encastrements arrière (42) possèdent une ou plusieurs fentes (42a) permettant de réduire le jeu avec lesdits longerons internes (32) lors du serrage des vis/écrou BAT/BAR (49).

Lesdits accessoires BAR (45) dudit BAR (40) sont connectés avec les autres modules par des éléments de connexion BAR (46). Il possède ainsi par exemple des capteurs électriques (45a) alimentés électriquement et commandés au travers d'un connecteur électrique BAR (46a) branché sur ledit connecteur électrique BATR (39a) dudit BAT (30) ; des étriers de frein (45b) reliés audit maître-cylindre (25d) par un connecteur de durit de frein AR (46b)connecté audit connecteur de durit de frein BATR (39b) dudit BAT (30). Ledit connecteur de durit de frein AR (46b) peut être un connecteur rapide ou un raccord vissé ou autre.

Ladite coque (50) comprend de préférence un faible nombre de pièces, favorablement une seule, de préférence en corps creux, ladite pièce étant disposée autour des passagers, formant une enceinte de protection contre les intempéries, le froid, le vent, et les chocs. Selon un mode de réalisation particulier mais non limitatif, ladite coque (50) est constituée d'un habitacle (51) réalisé en une pièce rotomoulée dans laquelle des inserts ouvrants (51p), des inserts hayon (51q) et des inserts ceinture (51r) sont incorporés lors du processus de rotomoulage. Ces inserts servent à fixer les ouvrants (52), le hayon (52a) et les ceintures. Des accessoires coque (53) font également partie dudit module coque (50).

Une trappe (55), favorablement située à l'avant du véhicule, permet d'accéder aux éléments d'utilisation et de maintenance de la voiture tels que le réservoir du lave glace (15), la batterie de bord (16), la boite à fusible (17), le réservoir de liquide frein (12), le réservoir de liquide de refroidissement (13), la prise de recharge des batteries (14) et le réglage en hauteur de feux, cette liste étant non limitative. Ledit habitacle (51) étant teintée dans la masse et n'étant pas peint pour des raisons écologiques, ladite trappe (55) est également rotomoulée afin de correspondre aux couleurs et états de surface du reste de la carrosserie.

Lors du montage de ladite coque (50) dans le centre d'assemblage final, ladite coque (50) est placée au-dessus dudit châssis (10) complètement assemblé. Ladite coque (50) est ensuite descendue de façon relativement verticale jusqu'à ce que la face fixation BAT (51a) et le support de planche de bord (51b) de ladite coque (50) reposent respectivement sur ledit fond (35) dudit BAT (30) et ladite structure en U (23) dudit BAV (20). Ledit habitacle (51) de ladite coque étant démoulé en une seule pièce, il ne possède pas de contre-dépouille et peut être posée simplement sur ledit châssis (10) sans qu'il y ait d'obstacle pour entraver sa descente. Ladite coque est enfin maintenue en position sur ledit châssis (10) par des vis. Sur le côté, des vis BAT/coque (56) passent au travers du fond (35) dudit BAT (30), et se vissent dans des inserts de fixation BAR (51d) intégrés audit habitacle (51) de ladite coque (50) lors de sa fabrication par rotomoulage. Cette fixation permet de fermer la partie inférieure dudit habitacle (51) par ledit BAT (30).

Lesdits accessoires coque (53) de ladite coque (50) tels que les essuie-glace (53a), les phares (53b) et les clignotants (53c), sont alimentés électriquement et commandés au travers d'un connecteur électrique coque (54) branché sur ledit connecteur électrique Coque AV (26d) dudit BAV (20).

A l'avant, dans la partie supérieure, des vis U/coque (59) passent au travers dudit habitacle (51), et se vissent dans de ladite structure en U (23) dudit BAV (20). Dans la partie inférieure, des vis BAV/coque (57) passent au travers de la traverse absorbeur avant (27) dudit BAV (20), et se vissent dans des inserts de fixation BAV (51c) intégrés audit habitacle (51) de ladite coque (50) lors de sa fabrication par rotomoulage.

A l'arrière, des vis BAR/coque (58) passent au travers de la traverse absorbeur arrière (47) dudit BAV (20), et se vissent dans des inserts de fixation BAR (51d) intégrés audit habitacle (51) de ladite coque (50) lors de sa fabrication par rotomoulage.

Tels que décrit ci-dessus, les modules n'ont ainsi que peu de connexions, que l'on peut mettre en œuvre simplement et rapidement, avec des moyens traditionnels et des outils classiques tels que des clés plates, des clés à œillet, des clés à pipe, des clés allen, des clés imbus, des clés torque ou des clés à cliquet. Ces opérations ne nécessitent pas de post traitement ni de contrôle particulier.

Ainsi, dans le centre d'assemblage final, une fois les 4 modules approvisionnés, les monteurs n'ont plus qu'à réaliser les opérations suivantes pour obtenir le véhicule assemblé final : encastrement desdits longerons internes (32) dans lesdits encastrements avant (22) et desdites fixations montants de U (23c) dans lesdits encastrements de U (33a) dans la même opération ; vissage desdits vis/écrous BAT/BAV (29), leur nombre étant compris entre 2 et 10, favorablement 8 ; vissage desdits vis/écrous BAT/U (28), leur nombre étant compris entre 2 et 12, favorablement 8 ; encastrement desdits longerons internes (32) dans lesdits encastrements arrière (42) ; vissage desdits vis/écrous BAT/BAR (49), leur nombre étant compris entre 2 et 10, favorablement 8 ; branchement dudit connecteur électrique de puissance BAV (26a) sur ledit connecteur électrique de puissance BAT (38a) ; branchement dudit connecteur électrique BAV (26b) sur ledit connecteur électrique BATV (38b) ; branchement dudit connecteur électrique BAR (46a) sur ledit connecteur électrique BATR (39a) ; raccordement dudit connecteur de durit de frein AV (26c) audit connecteur de durit de frein BATV (38c) ; raccordement dudit connecteur de durit de frein AR (46b) audit connecteur de durit de frein BATR (39b) ; placement de ladite coque (50) sur ledit châssis (10) ; vissage desdites vis BAT/coque (56) dans lesdits inserts de fixation BAT (51e), leur nombre étant compris entre 4 et 10, favorablement 8 ; vissage desdites vis U/coque (59) dans ladite structure en U (23), leur nombre étant compris entre 2 et 6, favorablement 4 ; vissage desdites vis BAV/coque (57) dans lesdits inserts de fixation BAV (51c), leur nombre étant compris entre 2 et 6, favorablement 4 ; vissage desdites vis BAR/coque (58) dans lesdits inserts de fixation BAR (51d), leur nombre étant compris entre 2 et 6, favorablement 4; branchement dudit connecteur électrique coque (54) sur ledit connecteur électrique CoqueAV (26d).

Les opérations finales de montage représentent donc 3 encastrements, 16 à 60 vissages (favorablement 44), 4 branchements de connecteurs électriques, et 2 raccordements de connecteurs de durite de frein. Ces fixations et ces connecteurs se trouvant dans des zones accessibles, les opérations sont simples et peuvent être réalisées en moins d'une heure à l'assemblage des quatre modules du véhicule.

Les centres d'assemblage nécessitent ainsi peu de moyens industriels et financiers. Ils peuvent ainsi être placés proches des lieux de consommation, c'est à dire des grandes villes. L'ensemble permet de limiter les transports de véhicules finis, et donc de diminuer leur énergie grise. Cette énergie grise est d'autant plus diminuée que lesdits modules (20, 30, 40) sont palettisés et amenés favorablement par train au centre d'assemblage final. Ce procédé diminue les investissements nécessaires à la fabrication d'un véhicule.

Dans la même mesure, l'invention permet de diminuer l'empreinte écologique à la fabrication, en supprimant l'investissement et la pollution liée aux lignes de ferrage d'acier : dégraissage au solvant, huilage avant estampage, dégraissage au solvant avant assemblage par soudure sur une ligne robotisée, bain cataphorèse de protection, peinture quatre couches de protection, vernis de protection peinture finition, puis retouche en fin d'assemblage. Les chutes des feuilles de tôles ont aussi disparu puisque toute la matière au départ se retrouve dans la pièce finale.

Enfin, ce principe d'assemblage modulaire ouvre la porte à la fabrication rapide hors ligne et dans de bonnes conditions économiques de véhicules sous licence puisque l'investissement final pour fabriquer le véhicule consiste en un hall d'assemblage et des outils standards.

La simplicité et la rapidité de montage et de démontage des quatre différents modules permettent de changer rapidement l'un d'eux sur un véhicule existant. Il est possible de changer rapidement ladite coque (50) en trente minutes si par exemple celle-ci est abîmé, vieillissante ou si l'utilisateur souhaite simplement changer de style de coque ou de couleur. Ceci permet de changer un nombre illimité de fois la carrosserie tout en gardant le même châssis propulsion, conçu pour être fonctionnel pendant plusieurs dizaines d'années. L'utilisateur peut ainsi s'adapter aux modes du moment et à ses envies. Les anciennes carrosseries sont recyclées après changement.

Il est également possible de changer rapidement ledit BAT (30) si par exemple celui-ci est endommagé par un choc, vieillissant, ou si l'utilisateur souhaite renouveler son pack batterie. Les batteries sont surveillées à distance par Wifi et le BAT peut être changé, collecté et recyclé par le centre d'assemblage.

Il est possible de changer rapidement ledit BAV (20) si par exemple celui-ci est endommagé par un choc, vieillissant, ou si l'utilisateur souhaite simplement changer de motorisation. Il est possible de changer rapidement ledit BAR (20) si par exemple celui-ci est endommagé ou vieillissant. L'utilisateur peut ainsi changer régulièrement et séparément ses modules, de sorte que son véhicule n'arrive jamais en bout de vie et qu'après le premier achat, il n'ait plus jamais à acheter un véhicule complet en une fois.

Selon un mode de réalisation, le véhicule n'est pas 100% électrique, mais hybride. Il est alors équipé d'un range extendeur alimenté en carburant par des réservoirs carburant (30c) situés dans les compartiments latéraux (30b) dudit BAT (30). Le carburant à l'intérieur desdits réservoirs carburant (30c) peut être de l'hydrogène, de l'essence, du gaz naturel, du biogaz ou du méthane pur.

Le véhicule selon la présente invention possède également des spécificités propres à résister aux chocs. Différents éléments de structure couplés à ladite structure en U (23) permettent en effet de reprendre les efforts de crash.

Lors d'un choc frontal, les efforts sont appliqués sur la face avant (51f) dudit habitacle (51) de ladite coque (50). Ils sont ensuite transmis à ladite traverse absorbeur (27) dudit BAV (20) qui de par sa rigidité les répartit sur les deux absorbeurs avant (21a) dudit berceau avant (21) dudit BAV (20). Lesdits absorbeurs (21a) s'appuient sur la face avant BAV (21b) dudit berceau avant (21). Les renforts avant BAV (21c) dudit berceau avant (21) transmettent ces efforts dans les renforts BAV (21d) dudit berceau avant (21) et dans les renforts de U (23d) de ladite structure en U (23). Depuis lesdits renforts BAV (21d), les efforts sont transmis aux renforts arrière BAV (21e) dudit berceau avant (21), auxdits encastrements avant (22) dudit BAV (20), puis aux longerons internes (32) dudit BAT (30). Depuis lesdits renforts de U (23d), les efforts sont transmis à ladite poutre transversale de U (23b) et auxdits montants de U (23a) de ladite structure en U (23), puis auxdits longerons latéraux (33). De ce fait, les efforts sont tous transmis à ladite BAT (30), de sorte qu'ils n'impactent pas les passagers du véhicule.

Les différents éléments cités forment une structure fermée de façon à améliorer la rigidité de l'ensemble, et donc à limiter les déformations qui pourraient empiéter sur l'espace vital des passagers. De plus, ledit montants de U (23a) est incliné vers l'avant par rapport à la direction verticale pour inclure une composante de compression dans son mode de déformation. Il se déforme ainsi moins que s'il était vertical et travaillait uniquement en flexion. De manière favorable, lesdits renforts de U (23d) forment un angle par rapport à la direction longitudinale du véhicule. Ils sont fixés au plus près desdits absorbeurs avant (21a) et montants de U (23a) afin de limiter la flexion desdits renforts avant BAV (21c) et poutre transversale de U (23b). Le fait de limiter la flexion de ces éléments permet ainsi de diminuer la déformation de l'ensemble.

En cas de choc frontal d'une hauteur trop importante pour être appliquée à ladite traverse absorbeur (27), ladite poutre transversale de U (23b) réalise la fonction d'anti-intrusion pour éviter que l'obstacle vienne en contact direct avec les passagers du véhicule.

Lors d'un choc latéral, les efforts sont appliqués sur la face latérale (51g) dudit habitacle (51) de ladite coque (50) et/ou sur ledit ouvrant (52) latéral. Ledit ouvrant (52) s'appuie sur les contours d'ouvrants (51h) de ladite face latérale (51g). Ces éléments s'appuient sur ledit longeron latéral (33) dudit BAT (30) et sur ledit montants de U (23a) de ladite structure en U (23). Les efforts sont donc transmis, transversalement à l'axe du véhicule, auxdits traverses avant (36) et traverses arrières (37) dudit BAT (30), et à ladite poutre transversale de U (23b) de ladite structure en U (23). Ces éléments travaillant en compression et étant réalisés dans un matériau rigide, favorablement de l'aluminium, ladite face latérale (51g) et lesdits ouvrants (52) latéraux seront bien supportés et pourront résister aux efforts du choc.

De manière favorable mais non limitative, des absorbeurs d'énergie peuvent être montés dans lesdits compartiments latéraux (30b) dudit module BAT (30) afin de protéger des chocs latéraux ladite batterie (31) située dans le compartiment central (30a) dudit module BAT (30).

Lors du retournement sur le toit (51i) dudit habitacle (51) de ladite coque (50) de la voiture, toute la masse du véhicule repose sur ladite coque (50). Ledit habitacle (51) est muni de piliers de pares-brises (51j) et de piliers de hayon (51k) aptes à supporter ces efforts. Lesdits piliers de pares-brises (51j) s'appuient sur des éléments rigides dudit châssis (10) tels que lesdits montants de U (23a) et ladite poutre transversale de U (23b).

En cas d'effort trop importants pour que lesdits piliers de pares-brises (51j) et lesdits pilier de hayon (51k) puissent les supporter, ledit habitacle (51) est supporté mécaniquement par des arceaux (11a) positionnés au sommet desdits sièges (11) et venant s'appuyer sur ledit toit (51i) dudit habitacle (51). Lesdits arceaux (11a) sont dimensionnés de manière à dépasser en hauteur la tête des passagers. Ainsi, la sécurité est assurée même en cas d'impact important sur ledit toit (51i).

Selon un mode de réalisation, des renforts coque supérieur (51l)en métal peuvent être intégrés à l'intérieur dudit habitacle (51) de ladite coque (50) lors du rotomoulage de la pièce, afin de relier ledit toit (51i) dudit habitacle (51) à des éléments rigides dudit châssis (10). De manière non limitative, ils se présentent sous la forme d'arceaux reliant le bas du côté gauche dudit habitacle (51) de ladite coque (50) au bas du côté droit dudit habitacle (51) de ladite coque (50) en passant par ledit toit (51i) dudit habitacle (51). Ainsi, un premier renfort pare-brise (51m) passe autour du pare-brise dans lesdits piliers de pare-brise (51j) dudit habitacle (51). Un deuxième renfort hayon (51n) passe autour dudit hayon (52a) dans lesdits piliers de hayon (51k) dudit habitacle (51). Un troisième renfort ouvrant (51o passe derrière lesdits ouvrants (52) de ladite coque (50).

Lesdits renforts coque supérieur (51l) reçoivent les efforts de façon directe lors d'un choc latéral ou lorsque le véhicule est sur ledit toit (51i) et les renvoient directement audit châssis (10). Les éléments de structure dudit châssis (10) sont alors moins sollicités, et la cellule de survie autour des passagers se déforme moins.

Les modes d'exécution décrits dans la présente demande le sont à titre d'exemples illustratifs et ne doivent pas être considérés comme limitatifs. D'autres modes d'exécution peuvent faire appel à des moyens équivalents à ceux décrits par exemple. Dans le cadre de la présente invention, des modes d'exécution peuvent également être combinés entre eux en fonction des circonstances, ou des moyens utilisés dans un mode peuvent être utilisés dans un autre mode. De même, les dimensions et matières indiquées dans la présente ne sont pas limitées aux exemples illustratifs mais des variantes utilisant des moyens, dimensions et matières équivalents sont possibles et envisageables.

## Revendications

1. Architecture de véhicule comprenant un châssis structurel rigide (10) de type plateforme; ladite architecture comprenant également un module coque indépendant (50), supporté par ledit châssis (10), qui forme l'habitacle et la carrosserie du véhicule (51), le châssis structurel rigide comprenant au moins trois modules distincts (20, 30, 40) qui assemblés ensemble reprennent tous les efforts routiers du véhicule et assurent sa propulsion, lesdits modules comprenant un module berceau avant (20), un module batterie (30) et un module berceau arrière (40), le module batterie (30) préservant l'intégrité de la cellule de survie et le module coque (50) étant réalisé par une ou par un assemblage de pièces polymères en corps creux (51) présentant des volumes fermés, lesdites pièces étant assemblées au châssis et agencées de telle manière à réaliser une protection autour des passagers du véhicule ; **caractérisé par** un assemblage mécanique, électrique et hydraulique simple des modules ensemble, cet assemblage étant réalisé uniquement avec des encastrements, des vis, des écrous, des connecteurs électriques et des connecteurs de durits de frein, un boitier de batterie structurel (30) réalisant la fonction de plateforme centrale, formé par l'assemblage de quatre longerons (32, 33) et deux tôles (34, 35), les longerons centraux (32) permettant de réaliser les encastrements sur les modules avant (20) et arrière (40).

2. Architecture de véhicule selon la revendication précédente, **caractérisée par** un habitacle (51) rotomoulé et refermé par le module batterie (30).

3. Architecture de véhicule selon l'une des revendications précédentes, **caractérisée par le fait que** le démontage est rendu simple par un nombre d'opérations réduit et des fixations desdits modules sur des zone accessible ; les opérations de démontage étant de défaire des encastrements, des vissages, des branchements de connecteurs électriques et des raccordements de durits de frein de sorte que l'on peut changer simplement et rapidement un ou plusieurs modules séparément des autres sur un véhicule déjà assemblé, permettant ainsi à l'utilisateur de renouveler simplement et à moindre frais l'état de son véhicule en cas d'accident, d'élément ne fonctionnant plus ou vieillissant.

4. Architecture de véhicule selon l'une des revendications précédentes, **caractérisée par** une fixation de tous les modules de la voiture (20, 40, 50) directement sur ledit boitier de batterie structurel (30).

5. Architecture de véhicule selon l'une des revendications précédentes, **caractérisée par** des dimensions pour les trois modules (20, 30, 40) du châssis (10) leur permettant d'être empilés sur un volume réduit à deux palettes avant assemblage, de façon à être transportés facilement au centre d'assemblage final.

6. Architecture de véhicule selon l'une des revendications précédentes, **caractérisée par** une structure en U (23) reprenant les efforts en cas d'accident, et ayant une fonction d'anti-intrusion dans la coque (50).

7. Architecture de véhicule selon l'une des revendications précédentes, **caractérisée par** un arrangement d'éléments structurels (21a, 21b, 21c, 21d, 21e, 23a, 23b, 23c, 23d, 27) permettant de transmettre les efforts de crash avant dans le BAT (30) avec des déformations réduites.

8. Architecture de véhicule selon l'une des revendications 6 ou 7, **caractérisée par** des piliers de pare-brises (51j) dans la coque (50) s'appuyant sur la structure en U (23).

9. Architecture de véhicule selon l'une des revendications 2 à 8, **caractérisée par** des inserts métalliques (51p, 51q, 51r) incorporés avec précision dans l'habitacle (51) lors du processus de rotomoulage.

10. Architecture de véhicule selon la revendication 9, **caractérisée par** une fixation des ceintures de sécurité, des ouvrants (52) et du hayon (52a) sur des inserts métalliques (51p, 51q, 51r).

11. Architecture de véhicule selon l'une des revendications 2 à 10, **caractérisée par** l'ajout de renforts (51l, 51m, 51n, 51o) dans l'habitacle (51), ces renforts ayant été intégrés lors du processus de rotomoulage.

12. Architecture de véhicule selon l'une des revendications précédentes, **caractérisée par** des sièges (11) possédant des arceaux (11a) dimensionnés de manière à dépasser en hauteur la tête des passagers.

13. Architecture de véhicule selon l'une des revendications précédentes, **caractérisée par** l'ajout d'absorbeurs d'énergie dans des compartiments latéraux (30b).

14. Architecture de véhicule selon l'une des revendications précédentes, **caractérisée par** l'ajout de réservoirs de carburant(30c) dans des compartiments latéraux (30b).

15. Architecture de véhicule selon la revendication 14, **caractérisée par** un carburant pouvant être de l'hydrogène, de l'essence, du gaz naturel, du biogaz ou du méthane pur.

16. Architecture de véhicule selon l'une des revendications précédentes, **caractérisée par** un habitacle (51) réalisé en une seule pièce.

17. Architecture de véhicule selon l'une des revendications précédentes, **caractérisée par** une trappe (55) réalisée dans l'habitacle (51) permettant d'accéder aux éléments d'utilisation et de maintenance de la voiture (12, 13, 14, 15, 16, 17).

## Patentansprüche

1. Aufbau eines Fahrzeugs, umfassend ein strukturelles Fahrgestell (10) vom Typ Plattform, wobei der Aufbau auch ein unabhängiges Außenhautmodul (50) umfasst, das von dem Fahrgestell (10) getragen wird und den Innenraum und die Karosserie des Fahrzeugs (51) bildet, wobei das starre strukturelle Fahrgestell mindestens drei unterschiedliche Module (20, 30, 40) umfasst, die zusammen alle Streckenkräfte des Fahrzeugs aufnehmen und dessen Antrieb gewährleisten, wobei die Module ein vorderes Tragmodul (20), ein Batteriemodul (30) und ein hinteres Tragmodul (40) umfassen, wobei das Batteriemodul (30) die Integrität der Fahrgastzelle gewährleistet und das Außenhautmodul (50) aus einem oder mehreren Hohlkörpern (51) aus Polymerteilen besteht, die geschlossene Volumen aufweisen, wobei die Teile mit dem Fahrgestell verbunden und so angeordnet sind, dass sie einen Schutz um die Fahrzeuginsassen bilden; **gekennzeichnet durch** eine einfache mechanische, elektrische und hydraulische Verbindung der Module untereinander, wobei diese Verbindung ausschließlich durch Einsteckverbindungen, Schrauben, Muttern, elektrische Steckverbinder und Bremsleitungsanschlüsse hergestellt ist, ein strukturelles Batteriegehäuse (30), das die Funktion einer zentralen Plattform erfüllt und aus vier Längsträgern (32, 33) und zwei Blechen (34, 35) zusammengesetzt ist, wobei die zentralen Längsträger (32) die Einpassungen an den vorderen (20) und hinteren (40) Modulen ermöglichen.

2. Fahrzeugaufbau nach dem vorherigen Anspruch, **gekennzeichnet durch** einen rotationsgeformten und durch das Batteriemodul (30) verschlossenen Fahrgastraum (51).

3. Fahrzeugaufbau nach einem der vorhergehenden Ansprüche, **dadurch gekennzeichnet, dass** die Demontage durch eine reduzierte Anzahl von Arbeitsschritten und Befestigungen der Module an zugänglichen Stellen vereinfacht ist; wobei die Demontageschritte darin bestehen, Einpassungen, Schrauben, elektrische Steckverbindungen und Bremsleitungsanschlüsse zu lösen, so dass ein oder mehrere Module einfach und schnell voneinander getrennt aus einem bereits montierten Fahrzeug ausgebaut werden können, wodurch der Benutzer im Falle eines Unfalls, einer Funktionsstörung oder einer Alterung eines Bauteils den Zustand seines Fahrzeugs einfach und kostengünstig wiederherstellen kann.

4. Fahrzeugaufbau nach einem der vorhergehenden Ansprüche, **gekennzeichnet durch** eine Befestigung aller Module des Fahrzeugs (20, 40, 50) direkt an dem genannten strukturellen Gehäuse der Batterie (30).

5. Fahrzeugaufbau nach einem der vorhergehenden Ansprüche, **gekennzeichnet durch** Abmessungen für die drei Module (20, 30, 40) des Fahrgestells (10), die es ermöglichen, diese vor der Montage auf ein auf zwei Paletten reduziertes Volumen zu stapeln, um sie leicht zum Endmontagezentrum transportieren zu können.

6. Fahrzeugaufbau nach einem der vorhergehenden Ansprüche, **gekennzeichnet durch** eine U-förmige Struktur (23), die die Kräfte bei einem Unfall aufnimmt und eine Einbruchhemmungsfunktion in der Außenhaut (50) bietet.

7. Fahrzeugaufbau nach einem der vorhergehenden Ansprüche, **gekennzeichnet durch** eine Anordnung von strukturellen Elementen (21a, 21b, 21c, 21d, 21e, 23a, 23b, 23c, 23d, 27), die es ermöglichen, die vorderen Aufprallkräfte mit geringen Verformungen in das strukturelle Gehäuse der Batterie (30) zu übertragen.

8. Fahrzeugaufbau nach einem der Ansprüche 6 oder 7, **gekennzeichnet durch** Windschutzscheibesäulen (51j) in der Außenhaut (50), die auf der U-förmigen Struktur (23) aufliegen.

9. Fahrzeugaufbau nach einem der Ansprüche 2 bis 8, **gekennzeichnet durch** metallische Einsätze (51p, 51q, 51r), die beim Rotationsformverfahren präzise in den Fahrgastraum (51) eingebracht werden.

10. Fahrzeugaufbau nach Anspruch 9, **gekennzeichnet durch** eine Befestigung der Sicherheitsgurte, der Öffnungselemente (52) und der Heckklappe (52a) an metallischen Einsätzen (51p, 51q, 51r).

11. Fahrzeugaufbau nach einem der Ansprüche 2 bis 10, **dadurch gekennzeichnet, dass** Verstärkungen (511, 51m, 51n, 51o) in den Fahrgastraum (51) hinzugefügt sind, wobei diese Verstärkungen beim Rotationsformverfahren integriert wurden.

12. Fahrzeugaufbau nach einem der vorhergehenden Ansprüche, **gekennzeichnet durch** Sitze (11), die Bügel (11a) besitzen, die so dimensioniert sind, dass sie den Kopf der Insassen in der Höhe überragen.

13. Fahrzeugaufbau nach einem der vorhergehenden Ansprüche, **gekennzeichnet durch** das Hinzufügen von Energieaufnehmern in seitlichen Fächern (30b).

14. Fahrzeugaufbau nach einem der vorhergehenden Ansprüche, **gekennzeichnet durch** das Hinzufügen von Kraftstofftanks (30c) in seitlichen Fächern (30b).

15. Fahrzeugaufbau nach Anspruch 14, **gekennzeichnet durch** einen Kraftstoff, der Wasserstoff, Benzin, Erdgas, Biogas oder reines Methan sein kann.

16. Fahrzeugaufbau nach einem der vorhergehenden Ansprüche, **gekennzeichnet durch** einen aus einem Stück gefertigten Fahrgastraum (51).

17. Fahrzeugaufbau nach einem der vorhergehenden Ansprüche, **gekennzeichnet durch** eine in dem Fahrgastraum (51) ausgebildete Klappe (55), die den Zugang zu den Bedienungs- und Wartungselementen des Fahrzeugs (12, 13, 14, 15, 16, 17) ermöglicht.

## Claims

1. Vehicle architecture comprising a rigid structural platform chassis (10); said architecture also comprising an independent shell module (50) supported by said chassis (10), which forms the passenger compartment and the body of the vehicle (51), said rigid structural chassis comprising at least three separate modules (20, 30, 40) that, once assembled together, take up all the road forces of the vehicle and power the latter, said modules comprising a front cradle module (20), a battery module (30) and a rear cradle module (40), the battery module (30) preserving the integrity of the survival cell and the shell module (50) being made by one hollow body polymer part or an assembly of hollow body polymer parts (51) having closed volumes, said parts being assembled to the chassis and arranged in such a way as to provide protection around the passengers of the vehicle; **characterized by** a simple mechanical, electrical and hydraulic assembly of the modules together, this assembly being carried out solely using end fixings, screws, nuts, electrical connectors and brake hose connectors, a structural battery housing (30) performing the function of a central platform and being formed by the assembly of four side rails (32, 33) and two sheets (34, 35), the central side rails (32) making it possible to form the end fixings on the front (20) and rear (40) modules.

2. Vehicle architecture according to the preceding claim, **characterized by** a passenger compartment (51) that is rotationally moulded and closed by the battery module (30).

3. Vehicle architecture according to either of the preceding claims, **characterized in that** disassembly is simplified by means of a reduced number of operations and fastenings of said modules on accessible areas; the disassembly operations consisting in releasing end fixings, screw fastenings, electrical connector connections and brake hose connections so that one or more modules can be changed simply, quickly and separately from the others on an already assembled vehicle, thus allowing the user to simply and inexpensively upgrade the condition of their vehicle in the event of an accident or in the case of an element that is ageing or no longer functioning.

4. Vehicle architecture according to one of the preceding claims, **characterized by** fastening all the modules of the automobile (20, 40, 50) directly to said structural battery housing (30).

5. Vehicle architecture according to one of the preceding claims, **characterized by** dimensions for the three modules (20, 30, 40) of the chassis (10) that allow them to be stacked on a reduced volume with two pallets before assembly, so as to be easily transported to the final assembly centre.

6. Vehicle architecture according to one of the preceding claims, **characterized by** a U-shaped structure (23) that takes up forces in the event of an accident and having a function of preventing intrusion into the shell (50).

7. Vehicle architecture according to one of the preceding claims, **characterized by** an arrangement of structural elements (21a, 21b, 21c, 21d, 21e, 23a, 23b, 23c, 23d, 27) enabling frontal impact forces to be transmitted into the BAT (30) with reduced deformations.

8. Vehicle architecture according to either of Claims 6 and 7, **characterized by** windscreen pillars (51j) in the shell (50) supported on the U-shaped structure (23).

9. Vehicle architecture according to one of Claims 2 to 8, **characterized by** metal inserts (51p, 51q, 51r) that are precisely incorporated into the passenger compartment (51) during the rotational moulding process.

10. Vehicle architecture according to Claim 9, **characterized by** fastening the seat belts, the opening elements (52) and the tailgate (52a) to metal inserts (51p, 51q, 51r).

11. Vehicle architecture according to one of Claims 2 to 10, **characterized by** adding reinforcements (511, 51m, 51n, 51o) into the passenger compartment (51), these reinforcements having been integrated during the rotational moulding process.

12. Vehicle architecture according to one of the preceding claims, **characterized by** seats (11) having roll bars (11a) dimensioned so as to surpass the height of the passengers' heads.

13. Vehicle architecture according to one of the preceding claims, **characterized by** adding energy absorbers into side compartments (30b).

14. Vehicle architecture according to one of the preceding claims, **characterized by** adding fuel tanks (30c) into side compartments (30b).

15. Vehicle architecture according to Claim 14, **characterized by** a fuel that may be hydrogen, petrol, natural gas, biogas or pure methane.

16. Vehicle architecture according to one of the preceding claims, **characterized by** a passenger compartment (51) formed in one piece.

17. Vehicle architecture according to one of the preceding claims, **characterized by** a flap (55) formed in the passenger compartment (51) that allows access to the operating and maintenance elements of the automobile (12, 13, 14, 15, 16, 17).
